# EUROPÄISCHE PATENTSCHRIFT

(11) **EP 0 381 948 B1**
(45) Veröffentlichungstag und Bekanntmachung des Hinweises auf die Patenterteilung: **04.08.1993**
(21) Anmeldenummer: 90100727.8
(22) Anmeldetag: 15.01.1990
(51) Int. Cl.: G01N 21/74

(54) **Ofen zur elektrothermischen Atomisierung von Proben für die Atomabsorptions-Spektroskopie**
Furnace for the electrothermal atomisation of samples in atomic absorption spectroscopy
Four pour l'atomisation électrothermique des échantillons en spectroscopie d'absorption atomique

(30) Priorität: 10.02.1989 DE 8901529 U
(43) Veröffentlichungstag der Anmeldung: 16.08.1990
(73) Patentinhaber: BODENSEEWERK PERKIN-ELMER GMBH, D-88662 Überlingen (DE)
(72) Erfinder: Tamm, Rolf, D-7777 Salem 2 (DE); Rödel, Günther, D-7776 Owingen (DE)
(74) Vertreter: Grünecker, Kinkeldey, Stockmair & Schwanhäusser Anwaltssozietät

(56) Entgegenhaltungen:
- EP-A- 0 321 879
- DE-A- 2 554 950
- DE-A- 3 545 635
- DE-A- 3 722 379
- DE-U- 8 713 503
- GB-A- 2 181 235
- US-A- 4 407 582

## Beschreibung

Die Erfindung betrifft einen Ofen zur elektrothermischen Atomisierung von Proben für die Atomabsorptions-Spektroskopie, enthaltend
(a) einen rohrförmigen, elektrisch leitenden Ofenkörper mit einer Eingabeöffnung, deren Achse im wesentlichen radial zur Rohrachse verläuft,
(b) einen der Eingabeöffnung gegenüberliegenden und zu dieser hin offenen, schalenförmigen Innenkörper mit einer zur Innenfläche des Ofenkörpers koaxialen Aussenfläche,
(c) Haltemittel zur Halterung des schalenförmigen Innenkörpers an der Innenwandung des Ofenkörpers im Abstand von dieser, wobei die Haltemittel versetzt gegen die Achse der Eingabeöffnung und damit unsymmetrisch an dem Innenteil angeordnet sind.

Atomabsorptions-Spektrometer dienen zur Bestimmung der Menge der Konzentration eines gesuchten Elementes in einer Probe. Zu diesem Zweck wird von einer linienemittierenden Lichtquelle, beispielsweise einer Hohlkathodenlampe, ein Messlichtbündel auf einen photoelektrischen Detektor geleitet. Im Strahlengang dieses Messlichtbündels ist eine Atomisierungsvorrichtung angeordnet. In dieser Atomisierungsvorrichtung wird die zu untersuchende Probe atomisiert, so dass ihre Bestandteile in atomarem Zustand vorliegen. Das Messlichtbündel enthält die Resonanzlinien des gesuchten Elements. Diese Resonanzlinien des Messlichtbündels werden von den Atomen des gesuchten Elements in der Atomwolke absorbiert, während im Idealfall die anderen in der Probe enthaltenen Elemente das Messlichtbündel nicht beeinflussen. Das Messlichtbündel erfährt daher eine Schwächung, die ein Mass für die Anzahl der im Weg des Messlichtbündels befindlichen Atome des gesuchten Elements und damit je nach dem angewandten Atomisierungsverfahren ein Mass für die Konzentration oder die Menge des gesuchten Elementes in der Probe darstellt.

Als Atomisierungsvorrichtung für hochempfindliche Messungen verwendet man vorzugsweise die elektrothermische Atomisierung: Die Probe wird in einen Ofen eingebracht, der durch Hindurchleiten von elektrischem Strom auf eine hohe Temperatur aufgeheizt wird. Dadurch wird die Probe in dem Ofen zunächst getrocknet, dann verascht und schliesslich atomisiert. In dem Ofen bildet sich dann eine "Atomwolke" aus, in welcher das gesuchte Element in atomarer Form vorliegt. Das Messlichtbündel wird durch diesen Ofen hindurchgeleitet.

Die Erfindung bezieht sich auf die Ausbildung eines solchen Ofens.

### Zugrundeliegender Stand der Technik

Es sind rohrförmige Öfen zur elektrothermischen Atomisierung von Proben für die Atomabsorptions-Spektroskopie in Form von "Graphitrohrküvetten" bekannt. Diese Öfen bestehen aus einem kleinen Rohr aus Graphit, das zwischen ringförmigen Kontakten eingespannt ist. Über diese Kontakte wird ein starker Strom in Längsrichtung durch das Rohr geleitet, wodurch das Rohr auf hohe Temperatur aufgeheizt werden kann. Die Probe wird durch eine seitliche Eingabeöffnung in das Rohr eingebracht und bei der Aufheizung des Rohres atomisiert. Das Messlichtbündel verläuft in Längsrichtung durch die ringförmigen Kontakte und die Bohrung des Rohres. Ein Schutzgasstrom umspült das Rohr innen und aussen und verhindert den Zutritt von Luftsauerstoff. Solche Graphitrohrküvetten sind in der DE-B-23 14 207, der DE-B 23 23 774 und in der DE-B-21 48 783 dargestellt und beschrieben.

Durch die DE-A-25 54 950 ist ein Ofen zur elektrothermischen Atomisierung flüssiger Proben (Graphitrohr) bekannt, bei welchem im Inneren des rohrförmigen eigentlichen Ofenteils ein ebenfalls rohrförmiger Innenkörper vorgesehen ist. Der Innenkörper ist konzentrisch zu dem Ofenkörper und erstreckt sich nur über einen mittleren Bereich des Ofenteils. Der Ofenkörper hat in der Mitte eine seitliche Eingabeöffnung. Eine damit fluchtende Eingabeöffnung ist in dem rohrförmigen Innenkörper angebracht. Der Innenkörper ist mit dem Ofenkörper durch längsverlaufende Rippen verbunden, die in der zu den Eingabeöffnungen senkrechten Längsebene verlaufen.

Durch diese Ausbildung des Ofens sollen Störungen vermieden werden, die dadurch auftreten, dass sich die eingebrachte Flüssigkeit über grosse Teile der Innenwand des Graphitrohres verbreiten kann und dabei zu den kühleren Endteilen des rohrförmigen Ofens gelangt. Dort findet nur eine unvollständige Verdampfung statt, so dass Probenmaterial verschleppt wird und nachfolgende Messungen anderer Proben stört. Auch sollen Probenverlust vermieden werden, die durch Einsickern von Probenflüssigkeit in den porösen Graphit auftreten können. Es ist in der DE-A-25 54 950 auch erwähnt, dass der Innenkörper wannenförmig sein könne. Weiterhin ist in der DE-A-25 54 950 darauf hingewiesen, dass bei der dort beschriebenen Ausbildung der Innenkörper nur indirekt beheizt werden und daher beim Aufheizen eine niedrigere Temperatur annehme als der Ofenkörper selbst. Das führe zu einer Konzentration der gebildeten Atomwolke in der Mitte des Ofens.

Es ist erwünscht, die Atomisierung der Probe gegenüber der Aufheizung der Wandung des Ofens zu verzögern. Es soll dadurch sichergestellt werden, dass die Probenbestandteile, wenn sie atomisiert werden, sich nicht an kühleren Wandungsteilen niederschlagen können und dass die Probe möglichst schlagartig atomisiert wird, so dass ein starkes Absorptionssignal auftritt. Durch eine Veröffentlichung von L'vov in "Spectrochimica Acta" Bd 33 B, 153-193 ist zu diesem Zweck eine Plattform von rechteckiger Grundform aus pyrolytischem Graphit bekannt, die in einen als Graphitrohr ausgebildeten Ofen eingesetzt wird. Um den Kontakt mit der Graphitrohrwandung zu verringern, sind längs der Längskanten der Plattform Ausschnitte angebracht. Auf diese Weise wird die Probe überwiegend indirekt durch Strahlung von der Innenwandung des Ofens aufgeheizt.

Die auf diese Plattformen dosierbare Menge an Probe ist begrenzt. Es ergibt sich für den Benutzer ausserdem die Schwierigkeit, dass in einen Ofenkörper eine noch kleinere Plattform eingesetzt werden muss. Das ist eine sehr umständliche Manipulation. Ein Teil des durch den Ofenkörper in Längsrichtung hindurchfliessenden elektrischen Stromes fliesst auch durch die Plattform. Die Plattform wird daher nicht nur indirekt durch Strahlung aufgeheizt. Vielmehr wird in der Plattform selbst Joulsche Wärme erzeugt.

Durch die nicht vorveröffentlichte deutsche Patentanmeldung DE-A-37 43 286 ist es bekannt, in einem rohrförmigen Ofenkörper einen zylinderschalenförmigen Innenkörper anzuordnen, der mit dem äusseren Ofenkörper durch einen Steg verbunden ist. Auf diese Weise ist der zylinderschalenförmige Innenkörper mit dem rohrförmigen Ofenkörper aus einem Stück hergestellt, so dass Handhabungsprobleme entfallen. Die eingebrachte Probe "sieht" die Wandung des äusseren Ofenteils, wird also indirekt von der Strahlung dieser Wandung beheizt.

Bei diesem Ofen ist ein Steg symmetrisch zu der Längsmittelebene des Innenkörpers und in der Mitte des Innenkörpers angeordnet. In diese Mitte wird aber die zu atomisierende Probe dosiert. Da der Ofen naturgemäss so angeordnet wird, dass der zylinderschalenförmige Innenkörper als "Plattform" im wesentlichen waagerecht ist, die Längsmittelebene des Innenkörpers also vertikal verläuft, sammelt sich die dosierte Probe auch im Bereich der Längsmittelebene an der tiefsten Stelle des Innenkörpers. Die dosierte Probe liegt somit unmittelbar über dem Steg. Die durch den Steg erfolgende, unvermeidbare Wärmezufuhr durch Wärmeleitung erfolgt also gerade an der Stelle, wo die zu atomisierende Probe sitzt. Das wirkt der angestrebten Verzögerung der Aufheizung der Probe gegenüber der Aufheizung des äusseren Ofenkörpers entgegen.

Durch die DE-A-35 45 635 ist ein Ofen für die elektrothermische Atomisierung von Proben für die Atomabsorptions-Spektroskopie mit einem rohrförmigen Ofenkörper und einem als Probenträger dienenden, schalenförmigen Innenkörper bekannt. Der Ofenkörper, durch den ein Heizstrom geleitet wird, hat eine Eingabeöffnung zur Eingabe der Probe. Der schalenförmige Innenkörper ist gegenüber dieser Eingabeöffnung angeordnet. Der Innenkörper hat etwa mondsichelförmigen Querschnitt. Der Innenkörper ist so im Abstand von der Innenwandung des Ofenkörpers gehaltert, dass die zylindrische Aussenfläche des Innenkörpers koaxial zur Innenfläche des Ofenkörpers ist. Der Innenkörper ist an einer Stelle des Ofenkörpers abgestützt die gegenüber der Eingabeöffnung in Längsrichtung des Ofenkörpers versetzt ist.

Bei der DE-A-35 45 635 ist der Innenkörper ein von dem Ofenkörper getrennter Bauteil, der mittels eines aussermittigen Zapfens in eine Bohrung in der Wandung des Ofenkörpers einsetzbar ist. Das geschieht mittels eines Werkzeugs vom offenen Ende des Ofenkörpers her.

Durch die DE-A-37 22 379 und die DE-U-87 13 503 sind Graphitrohre mit Plattformen bekannt, bei denen das Graphitrohr an einem Ende zwei diametral gegenüberliegende Einschnitte oder Ausnehmungen aufweist. In diese Ausnehmungen sind Ansätze einer T-förmigen Plattform, die von dem "Querbalken des T" gebildet sind, eingeschoben. Der "Längsbalken des T" bildet die eigentliche Plattform.

Diese Plattform weist eine Vertiefung zur Aufnahme der Probe auf. Die Plattform ist dabei seitlich in dem Graphitrohr gehalten. Das Graphitrohr wird dabei in konventioneller Weise in Längsrichtung vom Heizstrom durchflossen. Dabei ist das Ende der Plattform praktisch in direktem wärmeleitenden Kontakt mit einer gekühlten Elektrode. Bei einer zweiten Ausführung der genannten DE-A-37 22 379 ist eine rechteckige Plattform einseitig in Nuten eines radialen Steges eingeschoben, der ebenfalls in der Nähe eines Endes des Graphitrohres vorgesehen ist.

Bei allen diesen Ausführungen ist es erforderlich, in einem kleinen Graphitrohr eine noch kleinere Plattform zu manipulieren.

### Offenbarung der Erfindung

Der Erfindung liegt die Aufgabe zugrunde, einen Ofen der eingangs definierten Art auszubilden.

Erfindungsgemäss wird diese Aufgabe dadurch gelöst, dass
(d) der schalenförmige Innenkörper zylinderschalenförmig mit einer zu der Aussenfläche und der Innenwandung des Ofenkörpers koaxial verlaufenden Innenfläche ausgebildet ist,
(e) der Innenkörper mit dem Ofenkörper aus einem Materialstück hergestellt ist und somit einen integralen Bestandteil des Ofens bildet und
(f) die Haltemittel von einem einzigen, in Richtung der Rohrlängsachse schmalen Steg gebildet sind, über welchen Innenkörper und Ofenkörper zusammenhängen.

Auf diese Weise kann erreicht werden, dass der Steg nicht am Ort der dosierten Probe sitzt, wodurch der Erwärmung der Probe durch Wärmeleitung entgegengewirkt wird. Andererseits ist der Innenkörper eine zu der Innenwandung des Ofenteils hin offene Plattform. Die Probe "sieht" also die Innenwandung des Ofenteils und wird von dieser durch Strahlung beheizt, sobald der Ofenkörper die erforderliche Temperatur hat. Der Innenkörper bildet einen integralen Bestandteil des Ofens, so dass sich keine Handhabungsprobleme ergeben. Die Herstellung kann, wie unten beschrieben wird, vergleichsweise einfach erfolgen.

Ausgestaltungen der Erfindung sind Gegenstand der Unteransprüche.

Einige Ausführungsbeispiele der Erfindung sind nachstehend unter Bezugnahme auf die zugehörigen Zeichnungen näher erläutert:

### Kurze Beschreibung der Zeichnungen

- Fig. 1: zeigt, teilweise im Schnitt, eine Draufsicht auf einen Ofen mit angeformter zylinderschalenförmiger Plattform und Stromzuführung quer zur Achse des Ofenkörpers.
- Fig.2: zeigt eine Seitenansicht des Ofens, teilweise im Schnitt, längs der Linie II - II von Fig.1.
- Fig.3: zeigt eine Endansicht des Ofens, teilweise im Schnitt längs der Linie III - III von Fig.1.
- Fig.4: ist eine schematisch - perspektivische Darstellung einer weiteren Ausführungsform eines Ofens mit angeformter, unsymmetrisch gehaltener, zylinderschalenförmiger Plattform.
- Fig.5: zeigt, teilweise im Schnitt, eine Draufsicht auf einen Ofen ähnlich dem von Fig.1, bei welchem die Plattform an einem Ende über einen Steg im Ofenkörper gehalten ist.
- Fig.6: zeigt eine Endansicht des Ofens, teilweise im Schnitt längs der Linie VI - VI von Fig.5.

### Bevorzugte Ausführungen der Erfindung

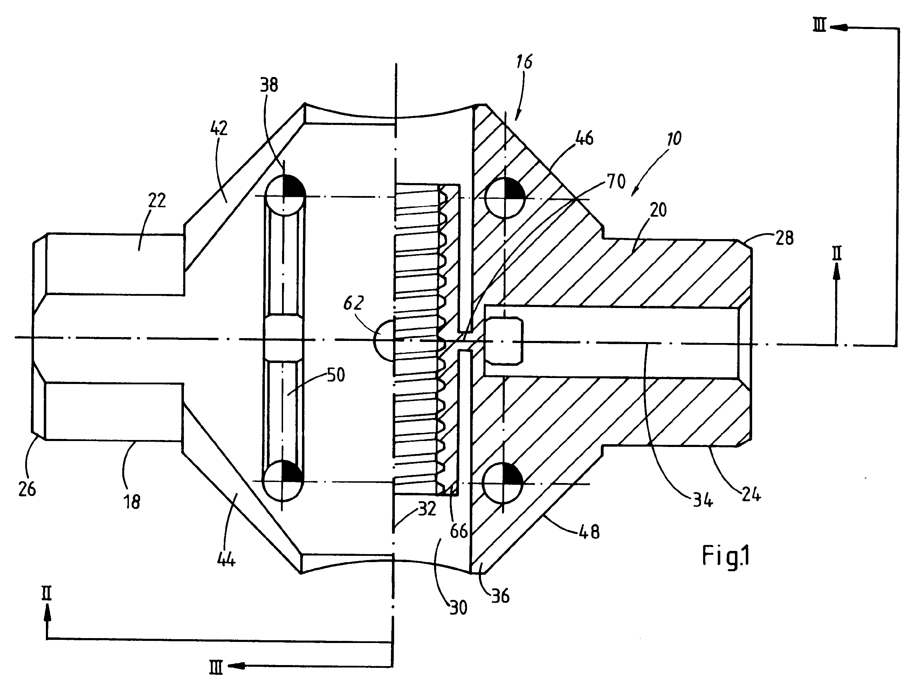

Bei dem Ofen von Fig.1 bis 3 ist mit 10 ein Graphitstück bezeichnet, das in seiner Grundform eine Platte mit einer oberen planen Fläche 12 und einer unteren planen Fläche 14 bildet. Das Graphitstück 10 weist einen Mittelteil 16 auf, der in Draufsicht im wesentlichen die Form eines regelmäßigen Achtecks besitzt. An zwei diametral gegenüberliegenden Seite dieses Achtecks sitzen Ansätze, welche Kontaktstücke 18 und 20 bilden. Diese Kontaktstücke 18 und 20 haben zylindrische Mantelflächen 22 bzw. 24, sind aber oben und unten durch die planen Flächen 12 bzw. 14 begrenzt und dadurch abgeflacht. Die Kontaktstücke 18 und 20 haben konische Kontaktflächen 26 bzw. 28. Mit diesen Kontaktflächen 26 und 28 ist der Ofen zwischen geräteseitigen Kontakten gehalten, über welche die Stromzufuhr erfolgt.

Die zu den Seiten mit den Kontaktstücken 18, 20 senkrechten Seiten des Achtecks sind durch eine Bohrung 30 verbunden. Die Achse 32 der Bohrung 30 verläuft senkrecht zu der Achse 34 der Kontaktstücke. Die Bohrung 30 bildet den rohrförmigen Ofen. Der Teil des Mittelteiles 16 zwischen den durch die Bohrung 30 verbundenen Seiten bildet einen Ofenkörper 36.

Zu beiden Seiten schließen sich an den Ofenkörper 36 Kontaktrippen 38 und 40 an. Die Kontaktrippen 38 und 40 sind in der Draufsicht von Fig.1 trapezförmig. Die Kontaktrippen 38 und 40 sind oben und unten durch die planen Flächen 12 und 14 und an den Seiten durch schräg verlaufende Seitenflächen 42,44 bzw. 46,48 begrenzt. Die lange Parallelseite des Trapezes grenzt jeweils an den Ofenkörper 36 an. Die schmale Parallelseite des Trapezes ist jeweils die ersterwähnte Seite des Achtecks und trägt das Kontaktstück 18 bzw. 20. Die Kontaktrippen 38 und 40 weisen Bereiche von vermindertem Querschnitt auf.

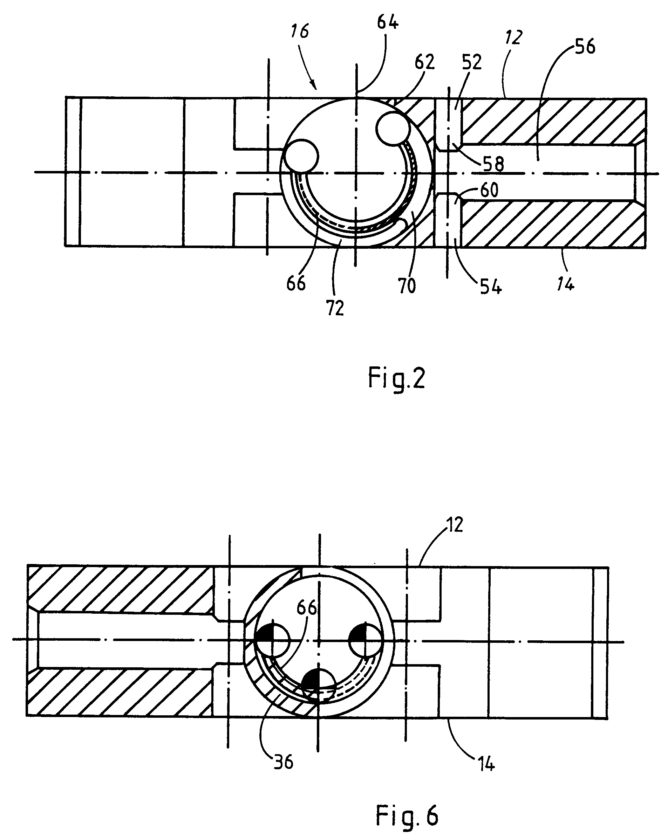

Bei dem Ofen nach Fig.1 bis 3 erfolgt die Verminderung des des Querschnitts für die Stromzufuhr längs des mittleren Bereichs des Ofenkörpers 36 durch Schlitze 50 und 52 bzw. 54 in den planen Flächen 12 und 14. Die Schlitze sind parallel zur Achse 32 des Ofenkörpers 36 und enden im Abstand von den Seitenflächen 42,44 bzw. 46,48. Wie aus Fig.2 ersichtlich ist, werden die Schlitze, z.B. 52 und 54 von Schutzgaskanälen, z.B. 56, angeschnitten. Das über die Schutzgaskanäle zuströmende Schutzgas tritt daher durch Öffnungen 58 und 60 in die Schlitze 52 und 54 und tritt durch diese Schlitze auf beiden Seiten und längs des gesamten Ofenkörpers 36 aus.

Durch die Verringerung des Querschnittes für die Stromzufuhr im mittleren Bereich des Ofenkörpers 36 wird eine besonders gleichmäßige Temperaturverteilung erreicht.

Der Ofenkörper 36 weist eine Eingabeöffnung 62 auf, durch welche eine zu analysierende Probe in den Ofen eingegeben werden kann. Die Achse 64 der Eingabeöffnung 62 ist senkrecht zu den Achsen 32 und 34 des Ofenkörpers 36 und der Kontaktstücke 18,20. Die Achse 64 der Eingabeöffnung 62 definiert zusammen mit der Achse 32 des Ofenkörpers 36 eine längsmittelebene. Das ist eine Ebene senkrecht zur Papierebene in Fig.1 längs der Achse 32.

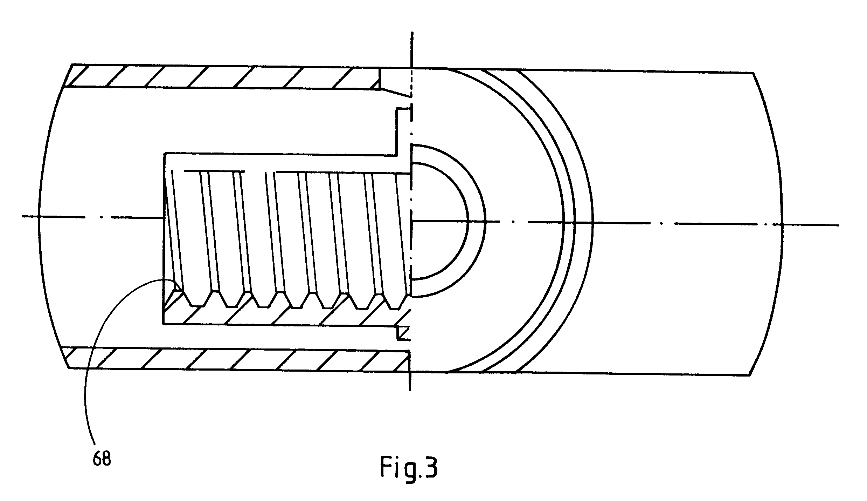

In der Bohrung 30 des Ofenkörpers 36 sitzt ein Innenkörper 66, der am besten in Fig.3 erkennbar ist. Der Innenkörper 66 bildet eine zylinderschalenförmige Plattform, hat also etwa die Gestalt eines halben Hohlzylinders. Die Innenfläche des Innenkörpers 66 weist bei der Ausführung nach Fig.1 bis 3 eine Folge von gewindeartigen Vorsprüngen 68 auf. Praktisch bilden die Vorsprünge 68 ein halbes Innengewinde. Diese Vorsprünge 68 hemmen das Auseinanderfließen einer durch die Eingabeöffnung 62 eingebrachten flüssigen Probe in Längsrichtung des Innenkörpers 66. Die Herstellung der Vorsprünge 68 als Teil eines Innengewindes hat fertigungstechnische Gründe: Es kann dann zunächst in den rohrförmigen Innenkörper mittels eines Gewindeschneiders ein Gewinde geschnitten und der Gewindeschneider dann wieder herausgedreht werden. Anschließend wird, wie in Fig.2 dargestellt ist, die eine Hälfte des Innenkörpers mit zwei Längsbohrungen herausgebohrt. Der Innenkörper ist in dem Ofenkörper 36 nur über einen einzigen Steg 70 gehalten.

Bei der Ausführung nach Fig.1 bis 3 ist dieser Steg 70 im Mittelbereich des Innenkörpers 66, etwa in der von den Achsen 34 und 64 definierten Ebene angeordnet. Von diesem ursprünglich sich um den gesamten Innenkörper erstreckenden Steg 70 ist ein bogenförmiger Schlitz 72 zwischen Innenkörper 66 und Ofenkörper 36 herausgefräst, so daß der verbleibende Steg 70 sich über einen Winkel um die Achse 32 des Ofens erstreckt, der deutlich kleiner als 180° ist. Dieser verbleibende Steg 70 sitzt seitlich an dem Innenkörper etwa symmetrisch zu der Achse 34 der Kontaktansätze 18,20. Dadurch wird zweierlei erreicht:

Einmal wird der Innenkörper 66 nicht von Strom durchflossen, da er keine Brücke zwischen den Kontaktansätzen 18 und 20 herstellt, über welche der Strom fließen könnte. Auch der Steg 70 bildet keine solche Brücke, so daß auch in dem Steg keine Joulsche Wärme erzeugt wird.

Der Steg 70 sitzt auch nicht dort, wo sich im Betrieb die Probenflüssigkeit sammelt. Im Betrieb ist der Ofen in einer Orientierung wie sie in Fig.2 dargestellt ist. Die Eingabeöffnung 62 liegt oben und die von dem Innenkörper 66 gebildete Plattform ist im wesentlichen waagerecht angeordnet, so daß sich die eingegebene Probenflüssigkeit auf dem Grund der zylinderschalenförmigen Plattform sammelt. Der Steg 70 ist gegen diese Stelle versetzt, so daß die Probe nicht in unmittelbarem, wärmeleitenden Kontakt mit dem Ofenkörper 36 steht.

Der beschriebene Ofen wird mittels der Kontaktansätze 18,20 in einem Atomabsorptions - Spektrometer zwischen zwei Kontakten eingespannt. Das Meßlichtbündel des Atomabsorptions - Spektrometers tritt dabei längs der Achse 32 des Ofens durch den rohrförmigen Ofenkörper 36, wobei es oberhalb des Innenkörpers 66 verläuft. Auf den Innenkörper 66 wird durch die Eingabeöffnung 62 eine Probe aufgebracht. Durch Hindurchleiten von elektrischem Strom durch den Ofen wird dieser auf eine sehr hohe Temperatur aufgeheizt. Der Innenkörper 66 und die Probe werden dabei überwiegend indirekt durch Strahlung beheizt. Dabei wird die Probe atomisiert. Es bildet sich eine Atomwolke, in welcher die Elemente und auch ein gesuchtes Element in atomarem Zustand vorliegen. Aus der Absorption des von einer linienemittierenden Lichtquelle ausgehenden Meßlichtbündels in der Atomwolke kann auf die Menge des gesuchten Elements geschlossen werden. Die geräteseitigen Kontakte umschließen den Ofen weitgehend. Über die Kontakte wird Schutzgas zugeführt, damit kein Luftsauerstoff zu dem Ofen gelangen kann und der aus Graphit bestehende Ofen bei den hohen Temperaturen nicht verbrennt. Die beschriebenen Schlitze und Bohrungen verteilen dieses Schutzgas, so daß der Ofen auf allen Seiten von dem Schutzgas umspült wird. Die Stromzufuhr erfolgt quer zur Richtung des Meßlichtbündels und zur Achse des Ofens. Durch die beschriebene Ausbildung wird eine optimal gleichmäßige Temperaturverteilung längs des Ofens erreicht.

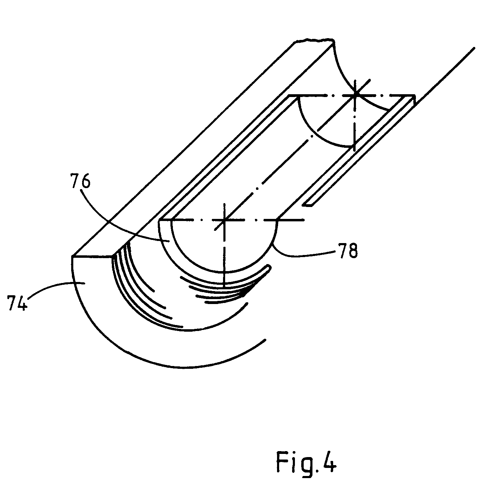

Fig 4 ist eine schematisch - perspektivische Darstellung einer anderen Ausführung eines Ofens mit Innenkörper. In der Darstellung von Fig.4 ist der obere Teil des eigentlichen Ofenkörpers 74 weggeschnitten, um den Innenkörper 76 und seine Halterung an dem äußeren Ofenkörper 74 erkennbar zu machen. Der Ofenkörper 74 ist hier ein Graphitrohr, das in bekannter Weise axial zwischen ringförmige Kontakte eingespannt und in Längsrichtung von Strom durchflossen wird.

Bei der Ausführung nach Fig.4 bildet der Innenkörper 76 ebenfalls eine zylinderschalenfärmige Plattform. Der Innenkörper 76 ist mit dem Ofenkörper 74 mittels eines einzigen Steges 78 verbunden. Dieser Steg 78 ist jedoch bei dieser Ausführung nicht nur seitlich, also nicht am Grunde der zylinderschalenförmigen Plattform, sondern auch an einem Ende des Innenkörpers 76 angeordnet, also axial gegen die Mitte des Innenkörpers versetzt. Dadurch ist der Steg 78 noch weiter von der auf den Mittelteil der Plattform aufgebrachten Probe entfernt. Der Weg für die Wärmeleitung von dem Ofenkörper 74 zu der Probe wird dadurch weiter verlängert.

Die Anbringung des Steges am Ende des Innenkörpers hat den weiteren Vorteil, daß der Steg auch außerhalb des Mittelbereiches des Ofenkörpers 74 angeordnet ist, der beim Aufheizen zuerst und am stärksten erwärmt wird und von dem aus dementsprechend der stärkste Wärmeübergang auf den Innenkörper erfolgen würde.

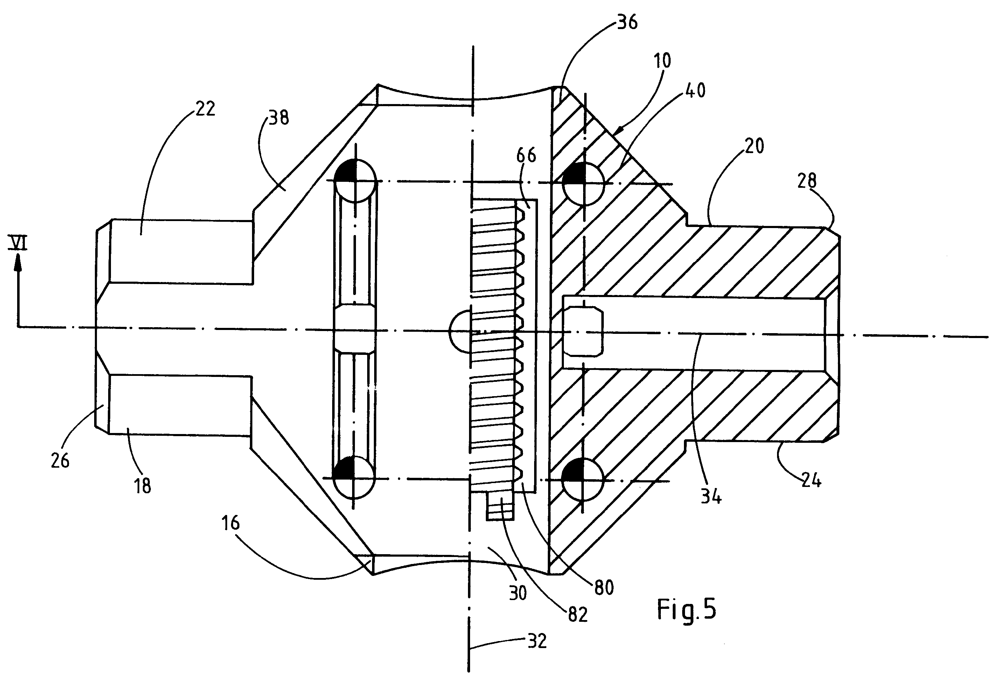

Fig.5 und 6 zeigen einen querbeheizten Ofen, der ähnlich aufgebaut ist wie der Ofen von Fig.1 bis 3. Entsprechende Teile sind in Fig.5 und 6 mit den gleichen Bezugszeichen versehen wie in Fig.1 bis 3.

Bei der Ausführungsform nach Fig.5 und 6 ist der Steg 80, der den Innenkörper 66 mit dem Ofenkörper 36 verbindet, seitlich und an einem Ende des Innenkörpers 66 an diesem vorgesehen. Das ist ähnlich wie bei dem längsbeheizten Ofen von Fig.4. Bei der Ausführung von Fig.5 und 6 sitzt jedoch der Steg 80 zusätzlich an einem axialen Ansatz 82, der an der Stirnfläche des Innenkörpers 66 gebildet ist.

## Patentansprüche

1. Ofen zur elektrothermischen Atomisierung von Proben für die Atomabsorptions-Spektroskopie, enthaltend:
(a) einen rohrförmigen, elektrisch leitenden Ofenkörper (36) mit einer Eingabeöffnung (62), deren Achse im wesentlichen radial zur Rohrachse verläuft,
(b) einen der Eingabeöffnung (62) gegenüberliegenden und zu dieser hin offenen, schalenförmigen Innenkörper (66) mit einer zur Innenfläche des Ofenkörpers (36) koaxialen Außenfläche,
(c) Haltemittel zur Halterung des schalenförmigen Innenkörpers (66) an der Innenwandung des Ofenkörpers (36) im Abstand von dieser, wobei die Haltemittel versetzt gegen die Achse der Eingabeöffnung (62) und damit unsymmetrisch an dem Innenkörper angeordnet sind,
**dadurch gekennzeichnet, daß**
(d) der schalenförmige Innenkörper (66) zylinderschalenförmig mit einer zu der Außenfläche und der Innenwandung des Ofenkörpers (66) koaxial verlaufenden Innenfläche ausgebildet ist,
(e) der Innenkörper (66) mit dem Ofenkörper (36) aus einem Materialstück hergestellt ist und somit einen integralen Bestandteil des Ofens bildet und
(f) die Haltemittel von einem einzigen, in Richtung des Rohrlängsachse schmalen Steg (70,78,80) gebildet sind, über welchen Innenkörper (66) und Ofenkörper (36) zusammenhängen.

2. Ofen nach Anspruch 1, **dadurch gekennzeichnet**, **daß** die Eingabeöffnung (62) gegenüber der Mitte des Innenkörpers angeordnet ist und der Steg (70,78,80) in Axialrichtung des Ofenkörpers gegen die Mitte des Innenkörpers (66) versetzt ist.

3. Ofen nach Anspruch 1, **dadurch gekennzeichnet**, **daß** der Steg (78,80) am Ende des Innenkörpers (66) vorgesehen ist.

4. Ofen nach einem der Ansprüche 1 bis 3, **dadurch gekennzeichnet**, **daß** der Steg (70,78,80) nur auf einer Seite der durch die Achsen der Eingabeöffnung (62) und des rohrförmigen Ofenkörpers (32) bestimmten Längsmittelebene vorgesehen ist.

5. Ofen nach den Ansprüchen 3 und 4, **dadurch gekennzeichnet**, **daß** der Steg (80) an einem sich in Axialrichtung des rohrförmigen Ofenkörpers (32) erstreckenden Ansatz (02) des Innenkörpers (66) vorgesehen ist, der auf einer Seite der besagten Längsmittelebene an dem Innenkörper (66) gebildet ist.

6. Ofen nach einem der Ansprüche 1 bis 5, **dadurch gekennzeichnet**, **daß** die Innenfläche des Innenkörpers (66) einen Teil einer Gewindefläche bildet.

## Claims

1. Furnace for the electrothermal atomisation of samples for atomic absorption spectroscopy, containing:
(a) a tubular electrically conductive furnace body (36) including an infeed opening (62) having an axis which extends substantially radially relative to the tube axis,
(b) a dish-shaped inner body (66) disposed opposite to the infeed opening (62) and open towards the same, said inner body having an outer surface which extends coaxially with an inner surface of the furnace body (36),
(c) supporting means for supporting the dish-shaped inner body (66) at the inner wall of the furnace body (36) at a spacing therefrom, said supporting means being offset from the axis of the infeed opening (62) and thus being unsymmetrically disposed at the inner body,
**characterised in that**
(d) the dish-shaped inner body (66) is constructed in the shape of a cylindrical dish having an inner surface which extends coaxially with the outer surface and the inner wall of the furnace body (66),
(e) the inner body (66) is formed integrally with the furnace body (36) from a single piece of material and thus forms an integral constituent of the furnace,
(f) the supporting means are formed by a single web (70,78,80) which has a small dimension in the direction of the longitudinal tube axis and by means of which the inner body (66) and the furnace body (36) are interconnected.

2. Furnace according to claim 1, **characterised in that** the infeed opening (62) is disposed opposite to the center of the inner body (66) and the web (70,78,80) is offset from the center of the inner body (66) in the axial direction of the furnace body.

3. Furnace according to claim 1, **characterised in that** the web (78,80) is provided at the end of the inner body (66).

4. Furnace according to any one of claims 1 to 3, **characterised in that** the web (70,78,80) is provided only on one side of the longitudinal central plane which defined by the axes of the infeed opening (62) and the tubular furnace body (32).

5. Furnace according to claims 3 and 4, **characterised in that** the web (80) is provided at the inner body (66) at a projection (82) which extends in the axial direction of the tubular inner body (32) and which is formed at the inner body (66) on one side of said longitudinal central plane.

6. Furnace according to any one of claims 1 to 5, **characterised in that** the inner surface of the inner body (66) forms a part of a threaded surface.

## Revendications

1. Four destiné à l'atomisation électrothermique d'échantillons pour la spectroscopie à absorption atomique, comprenant:
(a) un corps de four (36) tubulaire électriquement conducteur muni d'une ouverture d'introduction (62) dont l'axe s'étend généralement radialement à l'axe de tuyau,
(b) un corps intérieur (66) en forme de cuvette opposé à l'ouverture d'introduction (62) et ouvert vers celle-ci, et muni d'une surface extérieure coaxiale à la surface intérieure du corps de four (36),
(c) des moyens de fixation destinés à fixer le corps intérieur (66) en forme de cuvette à la paroi intérieure du corps de four (36) avec écartement de celle-ci, les moyens de fixation étant disposés de manière décalée par rapport à l'axe de l'ouverture d'introduction (62) et ainsi de manière non-symétrique sur le corps intérieur,
**caractérisé par le fait que**
(d) le corps intérieur (66) en forme de cuvette a une forme de cuvette cylindrique avec une surface intérieure coaxiale à la surface extérieure et à la paroi intérieure du corps de four (66),
(e) le corps intérieur (66) est fabriqué avec le corps de four (36) d'une seule pièce de matériau et forme ainsi un composant intégral du four,
(f) les moyens de fixation sont formés d'une seule traverse (70,78,80) étroite dans la direction de l'axe longitudinal de tuyau et par laquelle le corps intérieur (66) et le corps de four (36) sont communicants.

2. Four selon la revendication 1, **caractérisé par le fait que** l'ouverture d'introduction (62) est disposée en face du centre du corps intérieur, et la traverse (70,78,80) est décalée dans la direction axiale du corps de four par rapport au centre du corps intérieur (66).

3. Four selon la revendication 1, **caractérisé par le fait** **que** la tige (78,80) est prévue sur l'extrémité du corps intérieur (66).

4. Four selon l'une des revendications 1 à 3, **caractérisé par le fait que** la tige (70,78,80) n'est prévue que sur un côté du plan central longitudinal déterminé par les axes de l'ouverture d'introduction (62) et du corps de four tubulaire (32).

5. Four selon les revendications 3 et 4, **caractérisé par le fait que** la tige (80) est prévue sur un talon (82) du corps intérieur (66) qui s'étend dans la direction axiale du corps de four tubulaire (32), talon qui est formé sur un côté dudit plan central longitudinal sur le corps intérieur (66).

6. Four selon l'une des revendications 1 à 5, **caractérisé par le fait que** la surface intérieure du corps intérieur (66) forme une part d'une surface filetée.
